# FASCICULE DE BREVET EUROPEEN

(11) **EP 3 325 296 B1**
(45) Date de publication et mention de la délivrance du brevet: **08.05.2019**
(21) Numéro de dépôt: 16748336.1
(22) Date de dépôt: 12.07.2016
(51) Int. Cl.: B60J 1/18, B60J 7/04, B60J 7/06

(54) **VÉHICULE AUTOMOBILE COMPRENANT UN DISPOSITIF DE TOIT OUVRANT COMPORTANT UN VOLET ENROULABLE ET DÉROULABLE**
KRAFTFAHRZEUG MIT EINER SCHIEBEDACHVORRICHTUNG MIT EINEM ROLLLADEN ZUM ÖFFNEN UND SCHLIESSEN
MOTOR VEHICLE COMPRISING A SLIDING ROOF DEVICE COMPRISING A ROLL-UP AND ROLL-DOWN SHUTTER

(30) Priorité: 17.07.2015 FR 1556755
(43) Date de publication de la demande: 30.05.2018
(73) Titulaire: RENAULT s.a.s., 92100 Boulogne-Billancourt (FR)
(72) Inventeur: MULATO, Gilles, 92320 Chatillon (FR)
(86) Numéro de dépôt international: PCT/FR2016/051785
(87) Numéro de publication internationale: WO 2017/013328

(56) Documents cités:
- EP-A1- 0 803 390
- CA-A- 1 107 790
- CA-A1- 2 006 278
- DE-A1- 10 230 444
- DE-A1- 19 616 972
- FR-A1- 2 738 620

## Description

### DOMAINE TECHNIQUE AUQUEL SE RAPPORTE L'INVENTION

La présente invention concerne de manière générale un véhicule automobile comprenant un habitacle dans le toit duquel est ménagée une ouverture, ainsi qu'un dispositif de toit ouvrant adapté à obturer ou libérer ladite ouverture.

Elle concerne également un véhicule automobile dont l'habitacle est fermé à l'arrière par un hayon dans lequel est en outre ménagée une ouverture de hayon adaptée à être obturée ou libérée.

### ARRIERE-PLAN TECHNOLOGIQUE

Il est particulièrement agréable de circuler dans un véhicule automobile découvert, notamment l'été. L'habitacle d'un véhicule automobile découvert est en effet ventilé naturellement et offre une vue panoramique, particulièrement dégagée, à son conducteur et ses passagers. Un tel véhicule automobile découvert doit toutefois pouvoir être couvert, notamment en cas d'intempéries.

Afin de pouvoir alternativement couvrir et découvrir un véhicule automobile, il est connu de l'équiper avec un dispositif de toit ouvrant comprenant une capote en tissu montée sur un mécanisme repliable et escamotable dans le coffre du véhicule. Mais cette solution est technologiquement complexe, coûteuse et peut s'avérer fragile.

Il est connu par ailleurs d'équiper un véhicule automobile avec un dispositif de toit ouvrant comprenant une plaque vitrée orientable qui, dans une première position, ferme hermétiquement une ouverture pratiquée dans le toit de l'habitacle du véhicule automobile, et, dans une deuxième position inclinée par rapport au toit de l'habitacle, laisse pénétrer l'air extérieur dans l'habitable du véhicule. Un tel dispositif de toit ouvrant ne permet de découvrir qu'une petite partie du toit du véhicule automobile. Sa masse importante alourdit par ailleurs le toit du véhicule automobile.

Il est connu par ailleurs des documents FR 2738620, EP 0803390, DE 19616972 ou encore DE 10230444 d'équiper un véhicule automobile avec un dispositif de toit ouvrant comprenant un volet à lattes, enroulable, permettant soit d'obturer, soit de libérer une ouverture ménagée dans le toit du véhicule.

### OBJET DE L'INVENTION

Afin de remédier aux inconvénients précités de l'état de la technique, la présente invention propose un nouveau véhicule automobile comprenant un dispositif de toit ouvrant peu couteux et permettant de découvrir largement l'habitacle de ce véhicule.

Plus précisément, l'invention propose un véhicule automobile tel que défini en préambule, dans lequel ledit dispositif de toit ouvrant comprend :
- un volet comportant une pluralité de lattes disposées les unes à côté des autres, parallèlement à un axe d'enroulement du volet, et
- des moyens d'actionnement permettant de dérouler et d'enrouler le volet autour de son axe d'enroulement, entre une configuration déroulée dans laquelle il est déployé de manière à obturer ladite ouverture du toit de l'habitacle, et une configuration enroulée dans laquelle il est enroulé autour de son axe d'enroulement de manière à libérer cette ouverture, et dans lequel
ledit volet comprend au moins une latte inclinable mobile en pivotement, dans la configuration déroulée du volet, entre:
- une position d'étanchéité dans laquelle elle est jointive avec les autres lattes du volet de toit et s'étend dans un plan de déroulement du volet, et
- une position d'aération dans laquelle elle est inclinée par rapport audit plan de déroulement du volet.

Ainsi, grâce à l'invention, une partie très importante de l'habitacle du véhicule peut être découverte, ou recouverte par ledit volet.

Un tel dispositif de toit ouvrant est par ailleurs structurellement simple, facilement enroulable et déroulable, et donc peu couteux.

De plus, l'utilisation de lattes rend ce dispositif de toit particulièrement robuste. Un tel dispositif de toit ouvrant est par exemple plus robuste qu'un dispositif de toit ouvrant à capote amovible en tissu.

D'autre part, un tel dispositif de toit ouvrant peut être installé sur un véhicule automobile classique ne disposant pas d'un habitacle découvrable, sans nécessiter pour cela de modifier la structure de l'habitacle de ce véhicule automobile, il suffit de ménager une ouverture dans le toit de celui-ci avant d'installer ledit dispositif de toit ouvrant. Cette propriété est particulièrement intéressante, le véhicule selon l'invention pouvant ainsi être réalisé facilement à partir d'un modèle déjà existant de véhicule automobile.

D'autres caractéristiques non limitatives et avantageuses du véhicule automobile conforme à l'invention sont définies dans les revendications 2 à 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un véhicule automobile selon l'invention,
- la figure 2 est une vue schématique de profil du véhicule automobile de la figure 1,
- la figure 3 est une vue schématique de profil d'un premier mode de réalisation d'un dispositif de toit ouvrant adapté à être utilisé dans le véhicule automobile de la figure 1, dont le volet de toit et le volet de hayon sont chacun dans leur configuration déroulée,
- la figure 4 est une vue schématique de profil du dispositif de toit ouvrant de la figure 3, dont le volet de toit et le volet de hayon sont chacun dans leur configuration enroulée,
- la figure 5 est une vue schématique de profil d'un deuxième mode de réalisation d'un dispositif de toit ouvrant adapté à être utilisé dans le véhicule automobile de la figure 1, dont le volet de toit et le volet de hayon sont chacun dans leur configuration déroulée,
- la figure 6 est une vue schématique du dispositif de toit ouvrant de la figure 5, dont le volet de toit et le volet de hayon sont chacun dans leur configuration enroulée,
- la figure 7 est une vue schématique du volet de toit du dispositif de toit ouvrant de la figure 3,
- la figure 8 est une vue schématique de détail de la zone VIII de la figure 7,
- la figure 9 est une vue schématique du volet de la figure 7 muni d'une chaîne reliant des lattes inclinables de ce volet, ces lattes inclinables étant dans une position d'étanchéité,
- la figure 10 est une vue schématique du volet de la figure 9, les lattes inclinables de ce volet étant dans une position d'aération,
- la figure 11 est une vue schématique d'une roue d'entrainement de la chaîne de la figure 9,
- la figure 12 est une vue schématique d'une latte du volet de la figure 3 située à l'avant de celui-ci,
- la figure 13 est une vue schématique en coupe montrant plus particulièrement le montage de l'une des lattes inclinables du volet de la figure 7 dans un rail de guidage correspondant, cette latte étant dans sa position d'étanchéité, et
- la figure 14 est une vue schématique montrant le montage de la latte de la figure 13 dans le rail de guidage correspondant, cette latte étant dans sa position d'aération.

Les éléments identiques ou correspondant des différents modes de réalisation représentés sur les figures seront référencés par les mêmes signes.

L'avant d'un véhicule automobile est défini ici par rapport à son sens de déplacement courant, en marche avant.

Dans la suite de la description, les termes « avant » et « arrière » désigneront des éléments, ou parties d'éléments du dispositif de toit ouvrant, destinés à être tournés respectivement vers l'avant ou vers l'arrière du véhicule, ou situés respectivement en partie avant ou en partie arrière du véhicule.

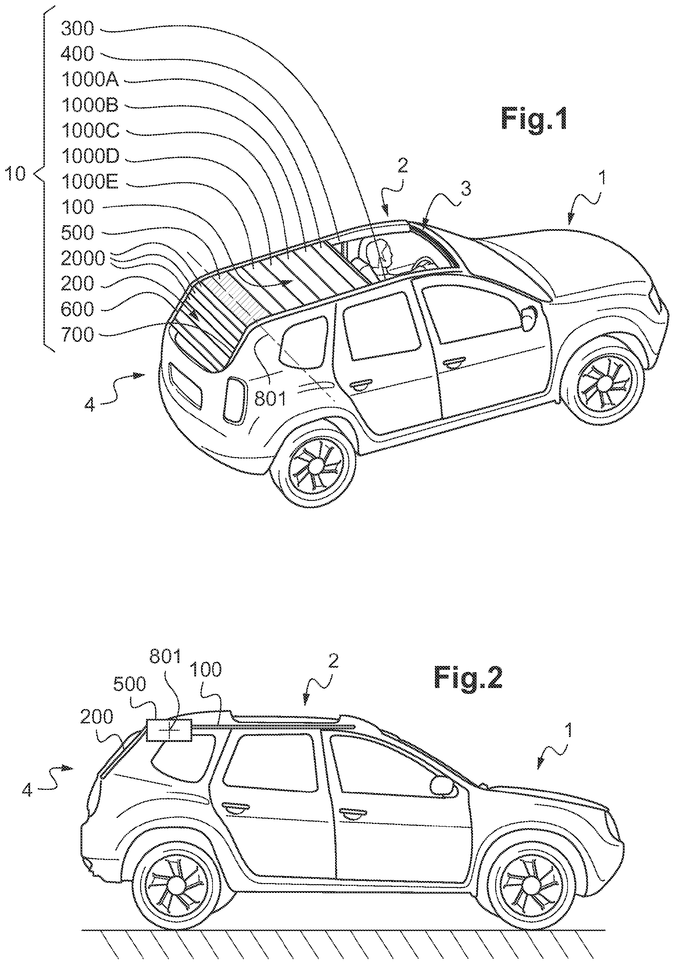

Les figures 1 et 2 représentent schématiquement un véhicule 1 automobile selon l'invention. Ce véhicule 1 comprend un habitacle destiné à accueillir un conducteur et des passagers du véhicule 1. Il s'agit ici d'un véhicule de tourisme.

Une ouverture 3 est ménagée dans le toit 2 de cet habitacle. Cette ouverture 3 met en communication l'intérieur de l'habitacle du véhicule 1 avec l'environnement extérieur de celui-ci.

Le toit 2 de l'habitacle du véhicule 1 est ici presque entièrement dégagé par cette ouverture 3. Celle-ci présente une forme sensiblement rectangulaire et épouse la forme du toit 2 de l'habitacle.

En variante, l'ouverture ménagée dans le toit de l'habitacle présente une forme quelconque.

Le véhicule 1 selon l'invention comprend également un dispositif de toit ouvrant 10 adapté à obturer ou libérer ladite ouverture 3.

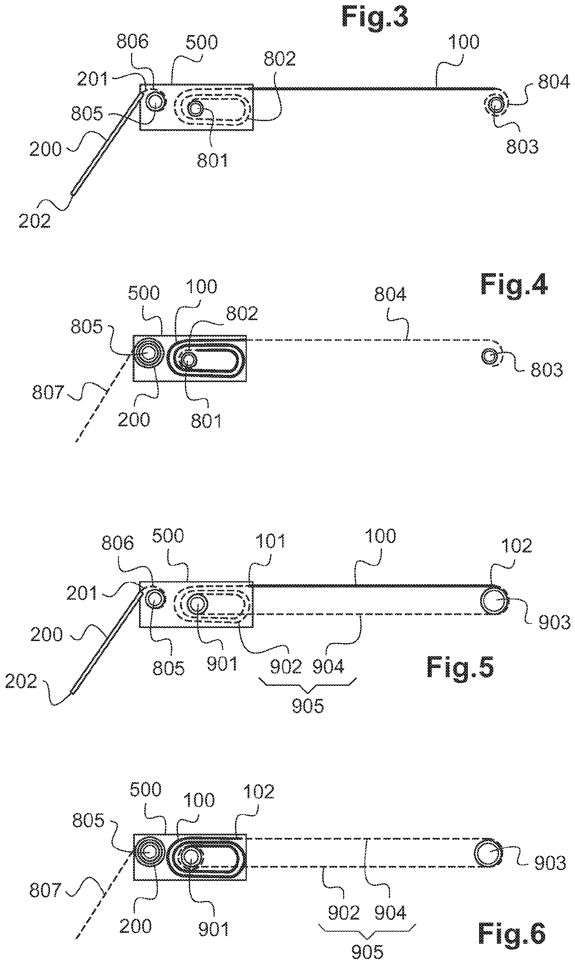

Deux modes de réalisation de ce dispositif de toit ouvrant sont représentés, respectivement sur les figures 3, 4 et 5, 6.

De manière remarquable, le dispositif de toit ouvrant 10 du véhicule 1 automobile comprend :
- un volet de toit 100 comportant une pluralité de lattes 1000A, 1000B, 1000C, 1000D, 1000E disposées les unes à côté des autres, parallèlement à un axe d'enroulement 801 ; 901 du volet de toit 100, et
- des moyens d'actionnement permettant de dérouler et d'enrouler le volet de toit 100 autour de son axe d'enroulement 801 ; 901, entre une configuration déroulée dans laquelle il est déployé de manière à obturer ladite ouverture 3 du toit 2 de l'habitacle, et une configuration enroulée dans laquelle il est enroulé autour de son axe d'enroulement 801 ; 901 de manière à libérer cette ouverture 3.

Dans la configuration enroulée du volet de toit 100, l'ouverture 3 ménagée dans le toit 2 de l'habitacle est ainsi libérée : l'habitacle est alors découvert et l'intérieur de celui-ci communique largement, sans séparation, avec l'environnement extérieur du véhicule 1. Le conducteur et les passagers du véhicule 1 bénéficient ainsi d'une vue panoramique, particulièrement dégagée, et d'une ventilation naturelle de l'habitacle.

Dans la configuration déroulée du volet de toit 100, celui-ci est déployé dans ou contre l'ouverture 3 et recouvre complètement la surface de cette ouverture 3. Le volet de toit 100 de l'habitacle forme alors une paroi séparant l'habitacle intérieur et l'environnement extérieur du véhicule.

Ici, l'habitacle du véhicule 1 comprend également un hayon 4, situé à l'arrière de l'habitacle. Ce hayon 4 est ici sensiblement vertical, tandis que le toit 2 de l'habitacle est sensiblement horizontal.

Une ouverture de hayon est ménagée dans celui-ci. Cette ouverture est située ici en partie supérieure du hayon et présente une forme sensiblement rectangulaire.

Ici, le dispositif de toit ouvrant 10 comprend aussi un volet de hayon 200 comportant une pluralité de lattes 2000 disposées les unes à côté des autres, parallèlement à un axe d'enroulement du volet de hayon 805, ainsi que des moyens d'actionnement du volet de hayon 200 permettant de le dérouler et de l'enrouler autour de son axe d'enroulement 805 (figure 3), entre une configuration déroulée dans laquelle il est déployé de manière à obturer ladite ouverture de hayon, et une configuration enroulée dans laquelle il est enroulé autour de son axe d'enroulement 805 de manière à libérer cette ouverture.

L'habitacle du véhicule 1 peut ainsi être découvert encore plus largement, ce qui représente un agrément supplémentaire pour le conducteur ou les passagers de ce véhicule.

Dans la configuration déroulée du volet de hayon 200 (figures 1, 3 et 6), celui-ci est déployé dans ou contre l'ouverture de hayon et recouvre complètement la surface de cette ouverture de hayon.

En variante, le dispositif de toit ouvrant comprend seulement un volet de toit, au lieu d'un volet de toit et d'un volet de hayon.

L'axe d'enroulement 801 ; 901 du volet de toit 100 et l'axe d'enroulement 805 du volet de hayon 200 sont ici situés à l'arrière du véhicule 1 automobile.

Plus précisément, chaque axe d'enroulement 801 ; 901, 805 du volet de toit et de hayon est situé ici à l'intérieur de l'habitacle du véhicule 1, dans une partie supérieure et à l'arrière de celui-ci.

L'axe d'enroulement 801 ; 901 du volet de toit 100 et l'axe d'enroulement 805 du volet de hayon 200 s'étendent ici transversalement par rapport au véhicule 1, c'est-à-dire parallèlement à l'axe des roues du véhicule 1.

Chaque axe d'enroulement est ici un arbre d'enroulement rotatif (figure 3 à 6).

En variante, l'axe d'enroulement du volet de toit ou du volet de hayon correspond seulement à la direction d'enroulement du volet de toit sur lui-même, ou à la direction d'enroulement du volet de hayon sur lui-même.

Les axes d'enroulement 801 ; 901, 805 du volet de toit et du volet de hayon sont logés ici dans un coffre 500 de rangement destiné à accueillir le volet de toit 100 et le volet de hayon 200 dans leur configuration enroulée. Il présente par exemple une forme parallélépipédique.

Ce coffre 500 est situé ici à l'intérieur de l'habitacle, en partie supérieure et à l'arrière de celui-ci.

En variante, les axes d'enroulement du volet de toit et du volet de hayon, ainsi que le coffre de rangement de ces volets, sont situés à l'extérieur de l'habitacle du véhicule, en partie supérieure et à l'arrière de celui-ci.

Sur la figure 1, le volet de toit 100 est dans une configuration intermédiaire, partiellement déroulée, dans laquelle il libère une partie seulement de l'ouverture 3 ménagée dans le toit 2 de l'habitacle. L'axe d'enroulement 801 ; 901 du volet étant situé à l'arrière du véhicule 1 automobile, la partie de l'ouverture 3 qui est libérée dans une telle configuration intermédiaire partiellement déroulée, est située du côté de l'avant du véhicule 1.

Une telle ouverture partielle, par l'avant, du toit 2 de l'habitacle est avantageuse car elle permet une aération de l'habitacle plus efficace qu'une ouverture partielle par l'arrière. En outre lorsque le conducteur du véhicule 1 est seul présent dans l'habitacle, ou lorsqu'il est présent dans ce dernier en compagnie seulement d'un passager avant, une telle ouverture partielle par l'avant lui permet de bénéficier d'une vue panoramique dégagée, tout en ouvrant de manière limitée le toit de l'habitacle.

Cette disposition à l'arrière de l'axe d'enroulement 801 ; 901 du volet de toit 100 est donc particulièrement intéressante, puisqu'elle permet ainsi de découvrir partiellement l'habitacle du véhicule par l'avant.

En outre, cette disposition permet de regrouper les axes d'enroulement du volet de toit et du volet de hayon dans le coffre 500.

Le dispositif de toit ouvrant 10 comprend également des rails de guidage dans lesquels les volets de toit et de hayon sont adaptés à coulisser.

Plus précisément, il est prévu deux rails de guidage 300, 400 qui s'étendent parallèlement entre eux et qui encadrent ladite ouverture 3 du toit 2 de l'habitacle pour guider le coulissement du volet de toit 100, et deux rails de guidage 600, 700 sensiblement parallèles, qui encadrent ladite ouverture de hayon, pour guider le coulissement du volet de hayon 200.

Les rails de guidage 300, 400, du volet de toit 100 s'étendent perpendiculairement à l'axe d'enroulement 801 ; 901 du volet de toit 100, le long de deux bords opposés de l'ouverture 3 du toit de l'habitacle. De manière similaire, les rails de guidage 600, 700 du volet de hayon 200 s'étendent perpendiculairement à l'axe d'enroulement du volet de hayon, le long de deux bords opposés de l'ouverture de hayon.

Les rails de guidage 300, 400 du volet de toit s'étendent longitudinalement par rapport au véhicule 1, c'est-à-dire parallèlement à l'axe longitudinal du véhicule 1, de l'arrière vers l'avant de ce dernier. Les rails de guidage 600, 700 du volet de hayon s'étendent sensiblement verticalement par rapport au véhicule 1, ou selon une direction inclinée par rapport à la verticale.

Chaque latte 1000A, 1000B, 1000C, 1000D, 1000E du volet de toit 100 est montée ici mobile en coulissement sur les rails de guidage 300, 400 du volet de toit, au niveau de deux extrémités opposées de cette latte. L'axe longitudinal de chacune des lattes 1000A, 1000B, 1000C, 1000D, 1000E du volet de toit 100 s'étend perpendiculairement à l'axe longitudinal du véhicule 1.

Dans sa configuration déroulée, le volet de toit 100 s'étend entre les rails de guidage 300, 400 du volet de toit de manière à obturer l'ouverture 3 du toit 2 de l'habitacle.

De manière comparable, chaque latte 2000 du volet de hayon 200 est montée ici mobile en coulissement sur les rails de guidage 600, 700 du volet de hayon, au niveau de deux extrémités opposées de cette latte. L'axe longitudinal de chacune des lattes 2000 du volet de toit 200 s'étend perpendiculairement à l'axe longitudinal des rails de guidage 600, 700 correspondants.

Dans sa configuration déroulée, le volet de hayon 200 s'étend entre les rails de guidage 600, 700 du volet de hayon de manière à obturer l'ouverture de hayon de l'habitacle.

Les rails de guidage 300, 400 du volet de toit 100 sont situés ici à l'extérieur du véhicule 1 et assurent ainsi une fonction de barres de toit sur lesquelles des objets à transporter peuvent être fixés.

Les rails de guidage 600, 700 du volet de hayon 200 sont ici aussi situés à l'extérieur du véhicule 1.

En variante, les rails de guidage du volet de toit sont situés à l'intérieur de l'habitacle et assurent seulement une fonction de guidage en coulissement du volet de toit.

En variante encore, les rails de guidage du volet de hayon peuvent également être situés à l'intérieur de l'habitacle.

Chaque rail de guidage 300, 400, 600, 700 du volet de toit et du volet de hayon est pourvu ici d'un enjoliveur qui donne au toit 2 et au hayon 4 de l'habitacle une apparence lisse et continue.

Chaque rail de guidage 300, 400, 600, 700 du volet de toit et du volet de hayon est muni ici de moyens d'évacuation d'eau. Ces moyens d'évacuation comprennent par exemple des moyens d'écoulement d'eau le long de ce rail de guidage 300, 400, 600, 700 et au moins un tuyau ou orifice d'évacuation situé à une extrémité de ce rail de guidage 300, 400, 600, 700.

Des renforts de structure de l'habitacle (non représentés) sont ici logés dans le coffre 500. Ces renforts comprennent par exemple une traverse arrière s'étendant transversalement par rapport au véhicule 1, renforçant la structure du toit 2 en partie arrière de celui-ci.

Les rails de guidage 300, 400 du volet de toit 100 sont fixés ici, en partie arrière, au coffre 500, et en partie avant à une traverse avant (non représentée), s'étendant transversalement par rapport au véhicule 1 et renforçant la structure du toit 2 en partie avant de celui-ci.

L'ensemble comprenant le coffre 500, les rails de guidage 300, 400 du volet de toit 100 et ladite traverse avant forme un cadre rigide, sensiblement rectangulaire. Ce cadre est fixé au toit 2 de l'habitacle, par exemple par collage ou vissage.

Les rails de guidage 600, 700 du volet de hayon sont fixés au hayon 4 de l'habitacle, par exemple par collage ou vissage.

En variante, les rails de guidage du volet de toit sont fixés seulement au toit de l'habitacle, sans être fixés à une traverse avant ou au coffre de rangement du volet de toit.

Selon une autre variante, le dispositif de toit ouvrant est réalisé sans coffre de rangement. Ici, les lattes 1000A, 1000B, 1000C, 1000D, 1000E du volet de toit 100 sont opaques et présentent chacune la même couleur, tandis que les lattes 2000 du volet de hayon 200 sont transparentes.

En variante, des lattes du volet de toit sont transparentes et/ou des lattes du volet de hayon sont opaques.

De manière optionnelle, les lattes du volet de toit ou de hayon sont réalisées dans un matériau isolant thermiquement et/ou phoniquement.

Selon une autre variante, certaines lattes du volet de toit ou de hayon présentent une couleur, ou des couleurs, différentes de la couleur d'une autre latte du volet de toit ou de hayon.

Comme mentionné précédemment, dans sa configuration enroulée, le volet de toit 100 est enroulé autour de son axe d'enroulement 801 ; 901 et contenu dans le coffre 500.

Ici, le coffre 500 comprend des moyens de guidage supplémentaires (non représentés) du volet de toit 100, permettant d'enrouler ce dernier sous forme d'un enroulement en spirale, aplati (figures 4 et 6). Dans sa configuration enroulée, le volet de toit 100 occupe alors un volume correspondant sensiblement à un cylindre aplati, plus large dans la direction longitudinale du véhicule 1, c'est-à-dire dans la direction s'étendant de l'avant à l'arrière de celui-ci, que dans une direction verticale.

Ces moyens d'enroulement supplémentaires peuvent comprendre par exemple un axe d'enroulement supplémentaire (non représenté) s'étendant parallèlement à l'axe d'enroulement 801 ; 901, à proximité de celui-ci. Le volet de toit dans sa configuration enroulée est alors enroulé autour de son axe d'enroulement et de cet axe d'enroulement supplémentaire.

Ils peuvent également comprendre des rails de guidage supplémentaires de forme spiralée, pour guider l'enroulement du volet de toit autour dudit axe d'enroulement et/ou autour de l'axe d'enroulement supplémentaire.

Les rails de guidage supplémentaires peuvent être intégrés aux rails de guidage du volet de toit précédemment décrits.

Les rails de guidage du volet de toit présentent alors chacun, à l'une de leurs extrémités, du côté de l'axe d'enroulement de ce volet, une forme de spirale contenue dans le coffre de rangement du volet de toit. Dans le cadre de cette variante, le volet dans sa configuration enroulée est enroulé autour de son axe, entre ses rails de guidage, dans leur partie présentant ladite forme en spirale.

Le coffre 500 présente alors une dimension avantageusement réduite dans la direction verticale (figures 3 à 6). Le coffre 500 limite alors particulièrement peu le champ de vision du conducteur du véhicule 1 à l'arrière et ne gêne pas les passagers qui souhaiteraient s'asseoir sur les sièges arrières.

Les moyens d'actionnement du dispositif de toit ouvrant 10 comprennent ici des moyens de traction flexibles reliés au volet de toit 100, permettant de tirer sur celui-ci de manière à l'enrouler ou à le dérouler.

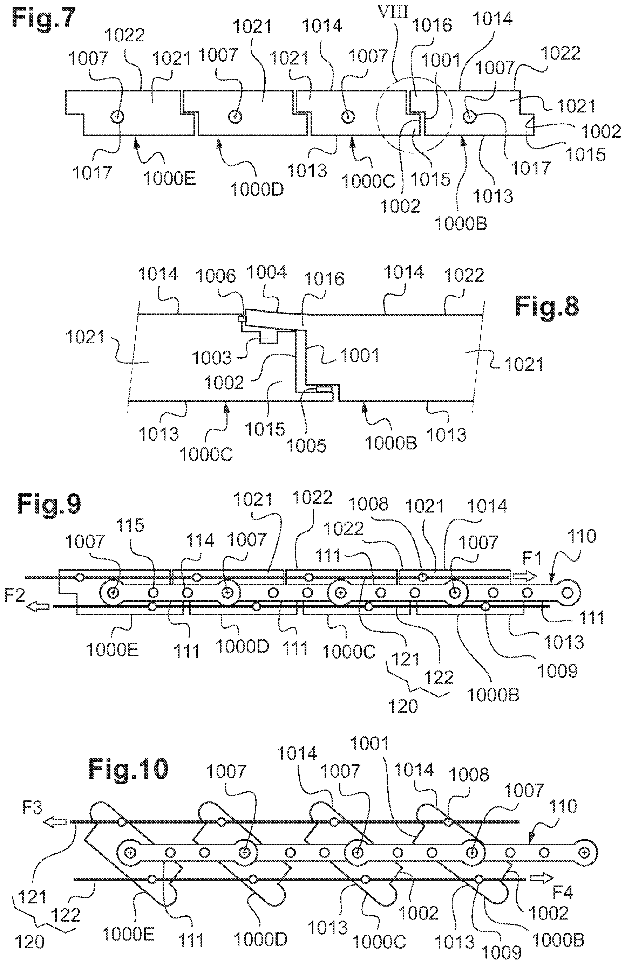

Ces moyens de traction flexibles comprennent ici deux chaînes 110 montées au niveau des extrémités des lattes 1000A, 1000B, 1000C, 1000D, 1000E (figures 9 et 10). Ces deux chaînes 110 sont ainsi montées le long des deux bords du volet de toit 100 au niveau desquels ce dernier est monté coulissant sur ses rails de guidage 300, 400. Ces deux chaînes 100 permettent ici, outre leur fonction de traction du volet de toit 100, de relier entre elles les lattes 1000A, 1000B, 1000C, 1000D, 1000E de ce dernier et d'assurer ainsi la cohésion du volet de toit 100.

Chacune de ces deux chaînes 110 comprend ainsi une partie montée le long du volet de toit 100. Cette chaîne se prolonge ici :
- au-delà du volet de toit 100, du côté de son axe d'enroulement 801 ; 901, par un premier tronçon 802 ; 902 permettant de tirer sur le volet de toit 100 pour l'enrouler (figures 3 à 6), et
- au delà du volet de toit 100, du côté opposé à son axe d'enroulement, par un deuxième tronçon 804 ; 904 permettant de tirer sur le volet de toit 100, vers l'avant du véhicule, pour le dérouler.

Selon le premier mode de réalisation du dispositif de toit ouvrant du véhicule 1 selon l'invention, représenté sur les figures 3 et 4, chacune des deux chaînes 110 est ouverte, c'est-à-dire qu'elle présente deux extrémités libres.

Les premier 802 et deuxième tronçons 804 de la chaîne 110 sont ainsi disjoints et présentent chacun une extrémité libre (figures 3 et 4).

Dans la configuration déroulée du volet de toit 100 (figure 3), le deuxième tronçon 804 de la chaîne 110 est ici enroulé autour d'une roue de stockage 803. Cette roue de stockage est située en partie supérieure de l'habitacle du véhicule 1, à l'avant de celui-ci. L'axe de rotation de cette roue s'étend parallèlement à l'axe d'enroulement 801 du volet de toit.

Dans la configuration enroulée du volet de toit 100 (figure 4), le deuxième tronçon 804 de la chaîne 110 s'étend sensiblement sur toute la longueur de l'ouverture 3 du toit 2 de l'habitacle, le long de l'un des rails de guidage 300, 400, depuis ladite roue de stockage 803 jusqu'au coffre 500 dans lequel est enroulé le volet de toit 100.

Dans la configuration enroulée du volet de toit 100, le premier tronçon 802 de la chaîne 110 est enroulé au moins en partie autour de l'axe d'enroulement 801 du volet de toit.

Dans ce premier mode de réalisation, les moyens d'actionnement du dispositif de toit ouvrant 10 comprennent en outre deux roues d'entrainement desdits moyens de traction flexibles.

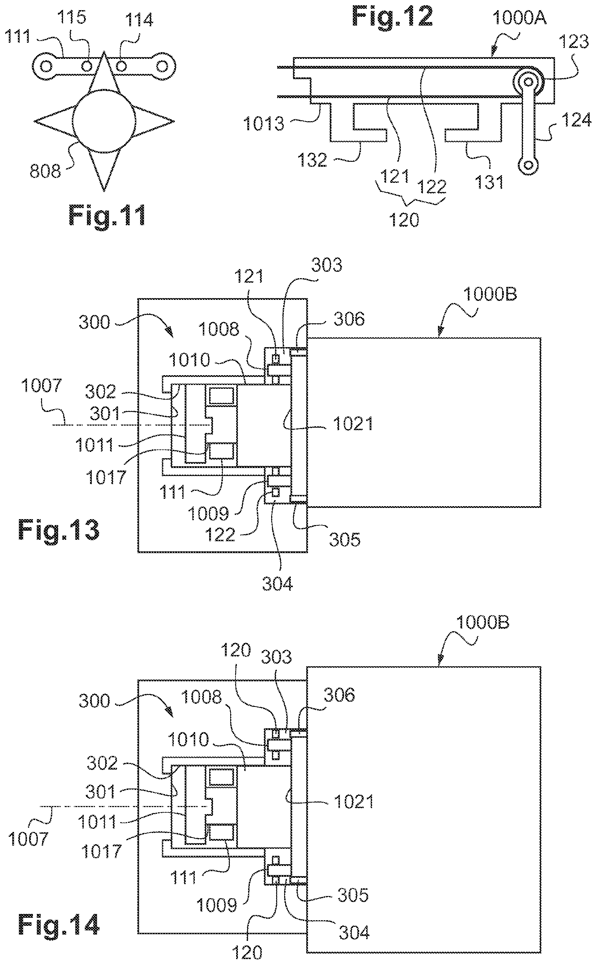

Le premier tronçon 802 de la chaîne 110 est ici entraîné par une première roue d'entrainement 808, en l'occurrence une roue dentée (visible figure 11, non représentée sur les figures 3 et 4) dont au moins une dent est engagée dans un maillon 111 de la chaîne 110. Cette première roue d'entrainement 808 est située ici à l'intérieur du coffre 500. Elle est commandée en rotation par un premier moteur électrique (non représenté).

Lorsque le volet de toit 100 est dans configuration déroulée (figure 3), une rotation de cette première roue d'entrainement 808 permet, par l'intermédiaire du premier tronçon 802 de la chaîne 110, d'exercer une traction sur le volet de toit 100, en direction de son axe d'enroulement 801, et ainsi de l'enrouler.

Le deuxième tronçon 804 de la chaîne 110 est entraîné par une deuxième roue d'entrainement (non représentée), comparable à la première roue d'entrainement 808 et située en partie avant de l'habitacle du véhicule. Cette deuxième roue d'entrainement est commandée en rotation par un deuxième moteur électrique (non représenté).

Lorsque le volet de toit 100 est dans sa configuration enroulée (figure 4), une rotation de cette deuxième roue d'entrainement permet, par l'intermédiaire du deuxième tronçon 804 de la chaîne 110, d'exercer une traction sur le volet de toit 100, en direction de l'avant de l'habitacle, et ainsi de le dérouler.

Ces moyens d'actionnement du dispositif de toit ouvrant permettent notamment de placer le volet de toit dans une configuration intermédiaire, partiellement déroulée, telle que représentée sur le figure 1.

En variante, les première 808 et deuxième roues d'entrainement sont actionnées manuellement au lieu d'être actionnées par des moteurs électriques.

Dans le deuxième mode de réalisation du dispositif de toit ouvrant du véhicule 1 selon l'invention, représenté sur les figures 5 et 6, lesdits moyens de tractions flexibles du volet de toit 100 relient une première extrémité 101 arrière du volet de toit 100 située à proximité de son axe d'enroulement 901 à une deuxième extrémité102 avant opposée du volet de toit 100. Cette deuxième extrémité 102 du volet de toit est située vers l'avant de habitacle dans la configuration déroulée du volet de toit 100.

A la différence du premier mode de réalisation, les moyens de tractions flexibles du volet de toit 100 selon ce deuxième mode de réalisation, et le volet de toit lui-même, forment donc une boucle fermée.

Plus précisément, le premier tronçon 902 de la chaîne, fixé à la première extrémité 101 du volet de toit, est ici relié au deuxième tronçon 904 de la chaîne, fixé quant à lui à la deuxième extrémité 102 du volet de toit. Ainsi, les premier 902 et deuxième tronçons 904 forment ici un seul tronçon d'entraînement 905 de la chaîne, continu (figures 5 et 6).

Ce tronçon d'entraînement 905 est renvoyé depuis la première 101 jusqu'à la deuxième extrémité 102 du volet de toit 100, par l'intermédiaire d'une poulie de renvoi 903 et de l'arbre d'enroulement 901 du volet de toit 100.

Cette poulie de renvoi 903 est située en partie supérieure de l'habitacle du véhicule, à l'avant de celui-ci. Son axe de rotation s'étend parallèlement à l'axe d'enroulement 901 du volet de toit.

Le tronçon d'entraînement 905 de la chaîne est par ailleurs enroulé au moins en partie autour de l'arbre d'enroulement du volet de toit, qui joue pour la chaîne le rôle d'une poulie.

A la différence du premier mode de réalisation décrit ci-dessus, les moyens d'actionnement de ce deuxième mode de réalisation comprennent seulement une roue d'entraînement unique (non représentée sur les figures 5 et 6) de la chaîne, au lieu d'une première 808 et d'une deuxième roue d'entraînement.

Cette roue d'entraînement unique est une roue dentée dont au moins une dent est engagée dans un maillon de la chaîne.

Cette roue d'entraînement unique est actionnée en rotation par un moteur électrique (non représenté).

Lorsque le volet de toit 100 est dans une configuration déroulée (figure 5), une rotation de cette roue d'entraînement unique selon un premier sens de rotation permet, par l'intermédiaire du tronçon d'entraînement 905 de la chaîne, d'exercer une traction sur la première extrémité 101 du volet de toit 100, en direction de son axe d'enroulement 901, et ainsi de l'enrouler.

Lorsque le volet de toit 100 est dans sa configuration enroulée (figure 6), une rotation de cette roue d'entraînement unique selon un deuxième sens de rotation, en sens inverse du premier sens de rotation, permet, par l'intermédiaire du tronçon d'entraînement 905 de la chaîne, d'exercer une traction sur la deuxième extrémité 102 du volet de toit 100, en direction de l'avant de l'habitacle, et ainsi de le dérouler.

De même que dans le premier mode de réalisation décrit précédemment, ces moyens d'actionnement du dispositif de toit ouvrant permettent notamment de placer le volet de toit dans une configuration intermédiaire, partiellement déroulée.

En variante, cette roue d'entraînement unique est actionnée manuellement.

Dans une variante de l'un quelconque de ces deux modes de réalisation, les moyens de traction flexibles comprennent des câbles ou des sangles au lieu de chaînes. Dans le cadre de cette variante, la traction exercée sur le volet de toit par l'intermédiaire des moyens de traction flexibles est obtenue par enroulement desdits moyens de traction autour d'une roue ou d'un arbre d'entraînement, au lieu d'être obtenue au moyen d'une roue d'entraînement dentée telle que décrite ci-dessus.

Dans une autre variante de l'un quelconque de ces deux modes de réalisation, les moyens d'actionnement du dispositif de toit ouvrant, permettant de dérouler ou d'enrouler le volet de toit, comprennent seulement une ou deux poignées de manoeuvre fixées à une latte du volet, et sont réalisés sans moyens de traction flexibles.

Les moyens de traction flexibles du volet de hayon 200 sont similaires à ceux du volet de toit 100 décrits précédemment.

En particulier, dans les modes de réalisation du dispositif de toit ouvrant représentés sur les figures 3 à 6, des premiers moyens de traction flexibles 806 du volet de hayon, tels que des sangles, des câbles, ou des chaînes, relient l'arbre d'enroulement 805 du volet de hayon 200 à une première extrémité 201 de ce volet de hayon 200 (figures 3 et 5).

Lorsque le volet de hayon 200 est dans sa configuration déroulée (figures 3 et 5), ces premiers moyens de traction flexibles 806 permettent de tirer sur le volet de hayon 200 en direction de son axe d'enroulement 805 afin de l'enrouler.

Des deuxièmes moyens de traction flexibles 807 du volet de hayon, tels que des sangles, des câbles, ou des chaînes, sont fixés à une deuxième extrémité 202 du volet de hayon opposée à sa première extrémité 201 (figures 4 et 6).

Lorsque le volet de hayon 200 est dans sa configuration enroulée (figures 4 et 6), ces deuxièmes moyens de traction flexibles 807 permettent de tirer sur le volet de hayon 200, vers le bas du hayon, afin de le dérouler.

Les premiers et deuxièmes moyens de traction flexibles du volet de hayon peuvent être distincts ou former un unique moyen de traction flexible.

La structure du volet de toit 100, notamment de ses lattes 1000A, 1000B, 1000C, 1000D, 1000E, est décrite plus en détail ci-dessous.

La figure 7 représente schématiquement une partie du volet de toit 100, vu de côté dans sa configuration déroulée.

Chaque latte 1000A, 1000B, 1000C, 1000D, 1000E de ce volet présente une forme globalement parallélépipédique très allongée, avec une face externe 1014 et une face interne 1013, tournées respectivement vers l'extérieur et vers l'intérieur de l'habitacle dans la configuration déroulée du volet de toit 100. Ces faces externes et internes sont reliées par deux faces latérales longitudinales arrière et avant 1001, 1002 dans la direction longitudinale de la latte. Chaque latte 1000A, 1000B, 1000C, 1000D, 1000E présente enfin deux faces d'extrémité 1020, 1021.

Les lattes 1000A, 1000B, 1000C, 1000D, 1000E de ce volet de toit 100 comprennent ici au moins une latte inclinable 1000B, 1000C, 1000D, 1000E mobile en pivotement dans la configuration déroulée du volet de toit, entre :
- une position d'étanchéité (figures 7 à 9) dans laquelle elle est jointive avec les autres lattes du volet de toit 100 et s'étend dans un plan de déroulement du volet de toit 100, et
- une position d'aération (figure 10) dans laquelle elle est inclinée par rapport audit plan de déroulement du volet de toit 100.

Ici, la première latte 1000A du volet de toit 100 (figures 1 et 12), c'est-à-dire la latte de ce volet qui, dans la configuration déroulée de ce volet, est la plus proche de l'avant du véhicule 1, est montée mobile seulement en coulissement sur les rails de guidage 300, 400 (figure 1) du volet de toit, sans pouvoir pivoter.

A l'exception de cette première latte 1000A, toutes les autres lattes 1000B, 1000C, 1000D, 1000E du volet de toit sont ici inclinables.

Chacune des lattes 1000B, 1000C, 1000D, 1000E inclinables est montée mobile en pivotement sur les rails de guidage 300, 400, au niveau de ses deux extrémités opposées. L'axe de pivotement 1007 de chaque latte 1000B, 1000C, 1000D, 1000E inclinable s'étend parallèlement à l'axe longitudinal de cette latte.

Dans sa position d'aération (figure 10) chaque latte inclinable 1000B, 1000C, 1000D, 1000E est positionnée de telle sorte que :
- la face latérale longitudinale arrière 1001 de cette latte 1000B, 1000C, 1000D, 1000E est surélevée par rapport au plan de déroulement du volet de toit 100, de manière à se situer à l'extérieur de l'habitacle du véhicule 1, tandis que
- la face latérale longitudinale avant 1002 de cette latte 1000B, 1000C, 1000D, 1000E est disposée plus bas que le plan de déroulement du volet de toit 100, de manière à se situer à l'intérieur de l'habitacle du véhicule 1.

Dans une variante non représentée, on pourrait envisager que les lattes soient inclinées selon une orientation inversée, dans laquelle la face latérale longitudinale avant de chaque latte est surélevée par rapport au plan de déroulement du volet de toit, tandis que la face latérale longitudinale arrière de cette latte est disposée plus bas que le plan de déroulement du volet de toit.

Deux lattes inclinables 1000B, 1000C, 1000D, 1000E dans leur position d'aération ménagent ainsi entre elles un passage par lequel de l'air peut alors pénétrer dans l'habitacle du véhicule 1 ou en sortir.

Lorsque le véhicule 1 circule, de l'eau, des gravillons ou des grains de poussière peuvent être projetés sur le toit de l'habitacle, de l'avant vers l'arrière du véhicule 1. Cette orientation des lattes décrite ci-dessus est particulièrement intéressante, car elle limite l'entrée de telles projections dans l'habitacle, tout en permettant une aération efficace de l'habitacle.

Dans leur position d'étanchéité, deux lattes inclinables 1000B, 1000C, 1000D, 1000E voisines se chevauchent partiellement pour former une chicane assurant l'étanchéité de la jonction entre ces deux lattes 1000B, 1000C, 1000D, 1000E.

Au niveau d'une telle jonction, représentée plus en détail sur la figure 8, la face latérale longitudinale avant 1002 d'une latte inclinable se trouve en vis-à-vis de la face latérale longitudinale arrière 1001 d'une latte inclinable voisine. Ces deux faces latérales longitudinales, avant 1002 et arrière 1001, présentent des formes complémentaires pour former ladite chicane.

Ici, au niveau de la face latérale longitudinale avant 1002 de chaque latte inclinable, la face interne 1013 de chaque latte inclinable se prolonge plus loin vers l'avant que sa face externe 1014. La face latérale longitudinale avant 1002 de chaque latte inclinable forme ainsi un décrochement, ici un décrochement en escalier 1015, reliant la face interne 1013 de chaque latte inclinable à sa face externe 1014.

D'autre part, ici, au niveau de la face latérale longitudinale arrière 1001 de chaque latte inclinable, la face externe 1014 de chaque latte inclinable se prolonge plus loin vers l'arrière que sa face interne 1013. La face latérale longitudinale arrière 1001 de chaque latte inclinable présente ainsi un décrochement en surplomb 1016, ici un décrochement de forme complémentaire dudit décrochement en escalier 1015, reliant la face externe 1014 de chaque latte inclinable à sa face interne 1013.

Ainsi, au niveau d'une jonction entre deux lattes inclinables 1000B, 1000C, 1000D, 1000E, le décrochement en surplomb 1016 qui prolonge la face externe 1014 de la latte qui est située le plus vers l'avant du véhicule 1 recouvre partiellement l'autre latte, située plus vers l'arrière du véhicule 1.

On notera que ce type de recouvrement des lattes inclinables 1000B, 1000C, 1000D, 1000E dans leur position d'étanchéité autorise un pivotement de ces lattes, depuis leur position d'étanchéité vers leur position d'aération décrite précédemment.

Dans une variante non représentée, le chevauchement en chicane entre deux lattes inclinables voisines dans leur position d'étanchéité présente un léger décroché en Z, de manière à améliorer encore l'étanchéité d'une telle jonction.

D'autre part, la face externe 1014 de chaque latte inclinable présente ici, du côté du décrochement en surplomb 1016 de sa face latérale longitudinale arrière 1001, une partie incurvée 1004 légèrement vers l'extérieur. Cette partie incurvée 1004 forme un saut de vent à la jonction entre deux lattes inclinables de manière, lorsque le véhicule 1 circule en marche avant, à guider l'air pour qu'il s'écoule le long du volet de toit, sans pénétrer dans la chicane séparant ces deux lattes.

Par ailleurs, ici, une gorge 1003 est ménagée en outre le long du décrochement en escalier 1015 de la face latérale longitudinale avant 1002 de chaque latte inclinable, pour améliorer encore l'étanchéité de la jonction entre deux lattes inclinables. Cette gorge limite en effet les possibilités d'écoulement d'un liquide dans ladite chicane vers l'intérieur de l'habitacle du véhicule, et lorsqu'un tel liquide pénètre dans cette chicane, le dévie vers les rails de guidage 300, 400 du volet de toit 100, d'où il peut être évacué par les moyens d'évacuation décrits précédemment.

L'étanchéité d'une jonction entre deux lattes inclinables 1000B, 1000C, 1000D, 1000E est encore améliorée, ici, par :
- un premier joint 1005, par exemple un joint en mousse, interposé entre ces deux lattes sur toute leur longueur, dans la chicane formée par cette jonction, à proximité de leurs faces internes 1015, et par
- un deuxième joint 1006, par exemple un joint en mousse, interposé entre ces deux lattes sur toute leur longueur, dans la chicane formée par cette jonction, à proximité de leurs faces externes 1014.

Ici, le dispositif de toit ouvrant 10 du véhicule comprend de plus au moins un câble 120 d'actionnement du pivotement des lattes inclinables 1000B, 1000C, 1000D, 1000E du volet de toit 100.

Une première partie 121 et une deuxième partie 122 de ce câble 120 sont montées le long du volet de toit 100, sur chaque latte inclinable 1000B, 1000C, 1000D, 1000E, au niveau d'au moins une des extrémités de cette latte, respectivement sur un premier 1008 et un deuxième pion d'actionnement 1009 (figures 9, 10, 13 et 14) de cette latte.

Ces premier 1008 et deuxième pions d'actionnement 1009 font saillie à partir de la face d'extrémité 1021 correspondante de la latte, dans la direction longitudinale de la latte.

Par ailleurs, les première 121 et deuxième parties 122 du câble 120 sont montées mobiles en pivotement autour des premier 1008 et deuxième pions d'actionnement 1009.

Les premier 1008 et deuxième pions d'actionnement 1009 s'élèvent dans deux coins diagonalement opposés de la face d'extrémité 1021 correspondante.

Ici, le premier pion d'actionnement 1008 est situé à proximité de la face latérale longitudinale arrière 1001 et de la face externe 1014 de la latte, tandis que le deuxième pion d'actionnement 1009 est situé à proximité de la face latérale longitudinale avant 1002 et de la face interne 1013 de cette latte.

Ainsi, une traction exercée sur la première partie 121 du câble 120 d'actionnement, en direction de l'avant du véhicule 1 (traction représentée par la flèche F1 sur le figure 9), et/ou une traction exercée sur la deuxième partie 122 du câble 120 d'actionnement, en direction de l'arrière du véhicule 1 (traction représentée par la flèche F2 sur le figure 9) entraîne un pivotement des lattes inclinables 1000B, 1000C, 1000D, 1000E, depuis leur position d'étanchéité (figure 9) vers leur position d'aération (figure 10).

De manière comparable, une traction exercée sur la première partie 121 du câble 120 d'actionnement, en direction de l'arrière du véhicule 1 (traction représentée par la flèche F3 sur le figure 10), et/ou une traction exercée sur la deuxième partie 122 du câble 120 d'actionnement, en direction de l'avant du véhicule 1 (traction représentée par la flèche F4 sur le figure 10) entraîne un pivotement des lattes inclinables 1000B, 1000C, 1000D, 1000E, depuis leur position d'aération (figure 10) vers leur position d'étanchéité (figure 9).

Une poulie 123, montée mobile en pivotement sur la première latte 1000A du volet de toit, renvoie le câble 120 d'actionnement de l'arrière vers l'avant du véhicule, et marque la limite entre lesdites première 121 et deuxième parties 122 de ce câble 120 (figure 12).

Une tirette 124 fixée à cette poulie 123 permet d'imposer manuellement une rotation à cette poulie 123, et ainsi d'exercer sur le câble 120 d'actionnement l'une des actions de traction décrite ci-dessus, ce qui a pour effet de faire pivoter les lattes inclinables du volet 1000B, 1000C, 1000D, 1000E, entre leur position d'aération et leur position d'étanchéité.

Chacune des deux chaînes 110 montées au niveau des extrémités des lattes 1000A, 1000B, 1000C, 1000D, 1000E comprend des maillons 111 reliés les uns aux autres (figures 9 à 11).

Deux lattes inclinables voisines 1000B, 1000C, 1000D, 1000E du volet de toit 100 sont reliées entre elles par un tel maillon 111 (figures 9 à 10), dont les extrémités sont montées mobiles en pivotement sur chacune de ces deux lattes, autour de l'axe de pivotement 1007 de cette latte inclinable.

Chaque maillon 111 de la chaîne 110 comprend par ailleurs deux pions d'entraînement 114, 115 (figure 11) adaptés à recevoir entre eux une dent de la première roue d'entraînement 808, dentée, mentionnée précédemment. Cette dent peut alors coopérer à retenue avec l'un de ces deux pions d'entraînement 114, 115 pour entrainer la chaîne 110 dans un sens ou dans l'autre.

Ici, les moyens d'actionnement du dispositif de toit ouvrant, permettant de dérouler ou d'enrouler le volet de toit 100, comprennent aussi une première 131 et une deuxième poignée de manoeuvre 132 fixées à la première latte 1000A du volet, sur la face interne 1013 de celle-ci.

La première poignée de manoeuvre 131 permet de tirer manuellement sur cette première latte 1000A, vers l'avant de l'habitacle, pour déployer le volet de toit 100, depuis sa configuration enroulée vers sa configuration déroulée.

La deuxième poignée de manoeuvre 132 permet de pousser manuellement sur cette première latte 1000A, vers l'axe d'enroulement 8001 ; 901 du volet, pour enrouler le volet de toit 100, depuis sa configuration déroulée vers sa configuration enroulée.

En variante, une poignée de manoeuvre seulement est fixée à la première latte du volet de toit.

Les figures 13 et 14 montrent plus particulièrement le montage de l'une des lattes 1000B inclinable du volet de toit 100 dans l'un des rails de guidage 300 correspondant. Le montage d'une quelconque latte inclinable de ce volet de toit, dans le rail de guidage correspondant, est identique.

Comme représenté sur ces figures, chaque latte du volet de toit comprend une partie cylindrique 1010, s'étendant en saillie à partir de chaque face d'extrémité 1021, 1022 de cette latte.

Cette partie cylindrique 1010 s'étend selon l'axe de pivotement 1007 de cette latte.

Une gorge 301 est ménagée le long du rail de guidage 300. Ladite partie cylindrique 1010 est engagée dans cette gorge 301 et s'appuie sur les parois latérales de cette gorge 301. Ladite latte 1000B est ainsi guidée en coulissement le long du rail de guidage 300, et guidée en pivotement autour de son axe de pivotement 1007.

Ladite partie cylindrique 1010 est prolongée par un pion de montage 1017 sur lequel est monté le maillon 111 correspondant de la chaîne 110. Le pion de montage 1017 s'étend selon l'axe de pivotement 1007 de cette latte.

Dans la configuration déroulée du volet de toit 100, la partie de la chaîne 110 qui relie entre elles les lattes 1000A, 1000B, 1000C, 1000D, 1000E de ce volet est ainsi logée dans ladite gorge 301, entre ce rail de guidage 300 et lesdites lattes, et est ainsi protégée.

Un bouchon d'axe 1011 est monté à l'extrémité du pion de montage 1017 de manière à maintenir le maillon 111 sur le pion de montage 1017.

Une pièce de glissement 302, par exemple en téflon, est insérée ici entre les parois latérales de cette gorge 301 et ladite partie cylindrique 1010 de la latte, facilitant ainsi le coulissement et le pivotement de cette latte.

En variante, ladite partie cylindrique de la latte est montée directement contre les parois de ladite gorge, sans pièce de glissement.

Un premier et un deuxième logements 303, 304 sont par ailleurs pratiqués le long de ce rail de guidage 300 pour accueillir les premier 1008 et deuxième pions d'actionnement 1009 de cette latte 1000B. Comme on peut le voir sur les figures 9, 10, 13 et 14, ces premier 1008 et deuxième pions d'actionnement 1009 s'écartent du plan de déroulement du volet lors du pivotement de cette latte 1000B vers sa position d'aération.

Ces premier et deuxième logements 303, 304 présentent une dimension adaptée à ce débattement des premier 1008 et deuxième pions d'actionnement 1009, lors du pivotement de cette latte 1000B vers sa position d'aération.

Dans la configuration déroulée du volet de toit 100, le câble 120 d'actionnement du pivotement des lattes est contenu dans ces premier et deuxième logements 303, 304, entre le rail de guidage 300 et les lattes du volet de toit, et est ainsi protégé.

De manière optionnelle, deux joints 305, 306, par exemple deux bandes de feutre, sont interposés entre le rail de guidage 300 et la latte 1000B, améliorant ainsi l'étanchéité de ladite gorge 301 et des premier 303 et deuxième 304 logements.

En variante, tout autre moyen de montage en coulissement et/ou en pivotement des lattes peut être envisagé.

Dans une variante non représentée, les lattes du volet de toit sont montées mobiles seulement en coulissement sur les rails de guidage du volet de toit, sans pouvoir pivoter. Dans le cadre de cette variante, l'étanchéité de la jonction entre deux lattes voisines du volet de toit peut être assurée par un joint flexible, ou par une charnière, au lieu d'être assuré par le chevauchement en chicane décrit ci-dessus. La liaison entre ces deux lattes voisines peut par ailleurs être réalisée alors par ce joint flexible, ou par cette charnière, au lieu d'être réalisée par un maillon d'une chaîne.

En variante, il est prévu pour le volet de hayon des lattes inclinables, similaires aux lattes inclinables du volet de toit décrites ci-dessus.

## Revendications

1. Véhicule (1) automobile comprenant un habitacle dans le toit (2) duquel est ménagée une ouverture (3), ainsi qu'un dispositif de toit ouvrant (10) adapté à obturer ou libérer ladite ouverture (3), ledit dispositif de toit ouvrant (10) comprenant
- un volet (100) comportant une pluralité de lattes (1000A, 1000B, 1000C, 1000D, 1000E) disposées les unes à côté des autres, parallèlement à un axe d'enroulement (801 ; 901) du volet, et
- des moyens d'actionnement permettant de dérouler et d'enrouler le volet (100) autour de son axe d'enroulement (801 ; 901), entre une configuration déroulée dans laquelle il est déployé de manière à obturer ladite ouverture (3) du toit (2) de l'habitacle, et une configuration enroulée dans laquelle il est enroulé autour de son axe d'enroulement (801 ; 901) de manière à libérer cette ouverture (3),
**caractérisé en ce que** ledit volet (100) comprend au moins une latte inclinable (1000B, 1000C, 1000D, 1000E) mobile en pivotement, dans la configuration déroulée du volet (100), entre :
- une position d'étanchéité dans laquelle elle est jointive avec les autres lattes du volet de toit (100) et s'étend dans un plan de déroulement du volet (100), et
- une position d'aération dans laquelle elle est inclinée par rapport audit plan de déroulement du volet (100).

2. Véhicule automobile selon la revendication 1, dans lequel ledit axe d'enroulement (801 ; 901) est situé à l'arrière du véhicule (1) automobile.

3. Véhicule automobile selon l'une des revendications 1 et 2, dans lequel ledit axe d'enroulement (801 ; 901) est un arbre d'enroulement rotatif.

4. Véhicule automobile selon l'une des revendications 1 à 3, dans lequel ledit axe d'enroulement (801 ; 901) correspond à la direction d'enroulement du volet (100) sur lui-même.

5. Véhicule automobile selon l'une des revendications 1 à 4, dans lequel ledit dispositif de toit ouvrant comprend en outre deux rails de guidage (300, 400) qui s'étendent parallèlement entre eux, de manière à encadrer ladite ouverture (3) du toit (2) de l'habitacle, et dans lesquels le volet (100) est adapté à coulisser.

6. Véhicule automobile selon la revendication 5, dans lequel lesdits rails de guidage (300, 400) présentent chacun, à l'une de leurs extrémités, une forme de spirale.

7. Véhicule automobile selon l'une des revendications 1 à 6, dans lequel les lattes (1000A, 1000B, 1000C, 1000D, 1000E) du volet sont reliées entre elles par deux chaînes (110) montées au niveau des extrémités des lattes (1000A, 1000B, 1000C, 1000D, 1000E).

8. Véhicule automobile selon l'une des revendications 1 à 7, dans lequel lesdits moyens d'actionnement comprennent des moyens de traction flexibles reliés au volet (100), permettant de tirer sur le volet de manière à l'enrouler ou à le dérouler.

9. Véhicule automobile selon l'une des revendications 1 à 8, dans lequel, dans ladite position d'étanchéité, deux lattes inclinables (1000A, 1000B, 1000C, 1000D, 1000E) voisines se chevauchent pour former une chicane assurant l'étanchéité de la jonction entre ces deux lattes (1000A, 1000B, 1000C, 1000D, 1000E).

10. Véhicule 1 automobile selon l'une des revendications 1 à 9, dont l'habitacle est fermé à l'arrière par un hayon (4) dans lequel est ménagée une ouverture de hayon, et dans lequel le dispositif de toit ouvrant (10) comprend de plus un volet de hayon (200) comportant une pluralité de lattes (2000) disposées les unes à côté des autres, parallèlement à un axe d'enroulement (805) du volet de hayon, ainsi que des moyens d'actionnement du volet de hayon (200) permettant de le dérouler et de l'enrouler autour de son axe d'enroulement (805), entre une configuration déroulée dans laquelle il est déployé de manière à obturer ladite ouverture de hayon, et une configuration enroulée dans laquelle il est enroulé autour de son axe d'enroulement (805) de manière à libérer cette ouverture.

## Patentansprüche

1. Kraftfahrzeug (1), welches einen Fahrzeuginnenraum, in dessen Dach (2) eine Öffnung (3) ausgebildet ist, sowie eine Vorrichtung für ein öffnungsfähiges Dach (10), die dafür ausgelegt ist, die Öffnung (3) zu verschließen oder freizugeben, umfasst, wobei die Vorrichtung für ein öffnungsfähiges Dach (10) umfasst:
- einen Rollladen (100), der eine Vielzahl von Latten (1000A, 1000B, 1000C, 1000D, 1000E) umfasst, die nebeneinander, parallel zu einer Wickelachse (801; 901) des Rollladens, angeordnet sind;
- Betätigungsmittel, die es ermöglichen, den Rollladen (100) um seine Wickelachse (801; 901) zwischen einer abgewickelten Konfiguration, in welcher er ausgefahren ist, so dass er die Öffnung (3) des Daches (2) des Fahrzeuginnenraums verschließt, und einer aufgewickelten Konfiguration, in welcher er um seine Wickelachse (801; 901) gewickelt ist, so dass er die Öffnung (3) freigibt, abzuwickeln und aufzuwickeln,
**dadurch gekennzeichnet, dass** der Rollladen (100) wenigstens eine neigbare Latte (1000B, 1000C, 1000D, 1000E) umfasst, die in der abgewickelten Konfiguration des Rollladens (100) schwenkbeweglich ist zwischen:
- einer Abdichtungsposition, in welcher sie fest an den anderen Latten des Dachrollladens (100) anliegt und sich in einer Abwickelebene des Rollladens (100) erstreckt, und
- einer Lüftungsposition, in welcher sie bezüglich der Abwickelebene des Rollladens (100) geneigt ist.

2. Kraftfahrzeug nach Anspruch 1, wobei sich die Wickelachse (801; 901) hinten am Kraftfahrzeug (1) befindet.

3. Kraftfahrzeug nach einem der Ansprüche 1 und 2, wobei die Wickelachse (801; 901) eine rotierende Wickelachse ist.

4. Kraftfahrzeug nach einem der Ansprüche 1 bis 3, wobei die Wickelachse (801; 901) der Wickelrichtung des Rollladens (100) auf sich selbst entspricht.

5. Kraftfahrzeug nach einem der Ansprüche 1 bis 4, wobei die Vorrichtung für ein öffnungsfähiges Dach außerdem zwei Führungsschienen (300, 400) umfasst, welche sich parallel zueinander erstrecken, so dass sie die Öffnung (3) des Daches (2) des Fahrzeuginnenraums umrahmen, und in welchen der Rollladen (100) zu gleiten in der Lage ist.

6. Kraftfahrzeug nach Anspruch 5, wobei die Führungsschienen (300, 400) jeweils an einem ihrer Enden eine Spiralform aufweisen.

7. Kraftfahrzeug nach einem der Ansprüche 1 bis 6, wobei die Latten (1000A, 1000B, 1000C, 1000D, 1000E) des Rollladens durch zwei Ketten (110) miteinander verbunden sind, die im Bereich der Enden der Latten (1000A, 1000B, 1000C, 1000D, 1000E) angebracht sind.

8. Kraftfahrzeug nach einem der Ansprüche 1 bis 7, wobei die Betätigungsmittel mit dem Rollladen (100) verbundene flexible Zugmittel umfassen, die es ermöglichen, an dem Rollladen zu ziehen, um ihn aufzuwickeln oder um ihn abzuwickeln.

9. Kraftfahrzeug nach einem der Ansprüche 1 bis 8, wobei in der Abdichtungsposition zwei benachbarte neigbare Latten (1000A, 1000B, 1000C, 1000D, 1000E) einander überlappen, um eine Sperre zu bilden, welche die Dichtigkeit der Stoßstelle zwischen diesen zwei Latten (1000A, 1000B, 1000C, 1000D, 1000E) sicherstellt.

10. Kraftfahrzeug (1) nach einem der Ansprüche 1 bis 9, dessen Fahrzeuginnenraum hinten durch eine Heckklappe (4) verschlossen ist, in welcher eine Hecköffnung ausgebildet ist und in welcher die Vorrichtung für ein öffnungsfähiges Dach (10) außerdem einen Heckklappen-Rollladen (200) umfasst, der eine Vielzahl von Latten (2000) aufweist, die nebeneinander, parallel zu einer Wickelachse (805) des Heckklappen-Rollladens, angeordnet sind, sowie Mittel zur Betätigung des Heckklappen-Rollladens (200), die es ermöglichen, ihn um seine Wickelachse (805) zwischen einer abgewickelten Konfiguration, in welcher er ausgefahren ist, so dass er die Hecköffnung verschließt, und einer aufgewickelten Konfiguration, in welcher er um seine Wickelachse (805) gewickelt ist, so dass er die Öffnung freigibt, abzuwickeln und aufzuwickeln.

## Claims

1. Motor vehicle (1) comprising a passenger compartment, in the roof (2) of which there is formed an opening (3), and also an opening roof device (10) designed to close or open said opening (3), said opening roof device (10) comprising:
- a shutter (100) having a plurality of slats (1000A, 1000B, 1000C, 1000D, 1000E) that are disposed next to one another, parallel to a rolling axle (801; 901) of the shutter, and
- actuating means for unrolling and rolling up the shutter (100) about its rolling axle (801; 901), between an unrolled configuration in which it is deployed so as to close said opening (3) in the roof (2) of the passenger compartment, and a rolled-up configuration, in which it is rolled-up around its rolling axle (801; 901) so as to open this opening (3),
**characterized in that** said shutter (100) comprises at least one inclinable slat (1000B, 1000C, 1000D, 1000E) that is pivotable, in the unrolled configuration of the shutter (100), between:
- a sealing position, in which it is contiguous with the other slats of the roof shutter (100) and extends in an unrolling plane of the shutter (100), and
- a ventilating position, in which it is inclined with respect to said unrolling plane of the shutter (100).

2. Motor vehicle according to Claim 1, wherein said rolling axle (801; 901) is situated at the rear of the motor vehicle (1).

3. Motor vehicle according to either of Claims 1 and 2, wherein said rolling axle (801; 901) is a rotary rolling shaft.

4. Motor vehicle according to one of Claims 1 to 3, wherein said rolling axle (801; 901) corresponds to the rolling-up direction of the shutter (100) on itself.

5. Motor vehicle according to one of Claims 1 to 4, wherein said opening roof device also comprises two guide rails (300, 400) which extend in a mutually parallel manner so as to frame said opening (3) in the roof (2) of the passenger compartment, and in which the shutter (100) is designed to slide.

6. Motor vehicle according to Claim 5, wherein said guide rails (300, 400) each have, at one of their ends, a spiral shape.

7. Motor vehicle according to one of Claims 1 to 6, wherein the slats (1000A, 1000B, 1000C, 1000D, 1000E) of the shutter are connected together by two chains (110) mounted at the ends of the slats (1000A, 1000B, 1000C, 1000D, 1000E).

8. Motor vehicle according to one of Claims 1 to 7, wherein said actuating means comprise flexible traction means that are connected to the shutter (100), making it possible to pull on the shutter so as to roll it up or unroll it.

9. Motor vehicle according to one of Claims 1 to 8, wherein, in said sealing position, two adjacent inclinable slats (1000A, 1000B, 1000C, 1000D, 1000E) overlap to form a chicane ensuring the leaktightness of the junction between these two slats (1000A, 1000B, 1000C, 1000D, 1000E).

10. Motor vehicle (1) according to one of Claims 1 to 9, the passenger compartment of which is closed at the rear by a tailgate (4) in which a tailgate opening is formed, and wherein the opening roof device (10) also comprises a tailgate shutter (200) having a plurality of slats (2000) disposed next to one another, parallel to a rolling axle (805) of the tailgate shutter, and means for actuating the tailgate shutter (200) that make it possible to unroll it and roll it up about its rolling axle (805), between an unrolled configuration, in which it is deployed so as to close said tailgate opening, and a rolled-up configuration, in which it is rolled-up around its rolling axle (805) so as to open this opening.
